Europäisches Patentamt

European Patent Office

Office européen des brevets

(11) Publication number: **0 239 145 B1**

# EUROPEAN PATENT SPECIFICATION

(45) Date of publication of patent specification: **23.10.91** (51) Int. Cl.⁵: **C08G 67/02**

(21) Application number: **87200333.0**

(22) Date of filing: **25.02.87**

(54) Catalyst compositions.

(30) Priority: **05.03.86 NL 8600563**

(43) Date of publication of application:
**30.09.87 Bulletin 87/40**

(45) Publication of the grant of the patent:
**23.10.91 Bulletin 91/43**

(84) Designated Contracting States:
**AT BE CH DE ES FR GB GR IT LI LU NL SE**

(56) References cited:
**EP-A- 0 121 965**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Van Broekhoven, Johannes Ad-
rianus Maria
Badhuisweg 3
NL-1031 CM Amsterdam(NL)**
Inventor: **Drent, Eit
Badhuisweg 3
NL-1031 CM Amsterdam(NL)**

(74) Representative: **Tuijn, Jan Warnaar et al
Shell Internationale Research Maatschappij
B.V., Patents, Licensing & Trade Marks Di-
vision, P.O. Box 302
NL-2501 CH The Hague(NL)**

## Description

The invention relates to novel compositions which are suitable for use as catalysts in the preparation of polymers of carbon monoxide with one or more olefinically unsaturated organic compounds.

High molecular weight linear polymers of carbon monoxide with one or more olefinically unsaturated organic compounds (for the sake of brevity referred to as A) in which the monomer units occur in an alternating order and which therefore consist of units of the general formula -(CO)-A'- wherein A' represents a monomer unit from a monomer A used, can be prepared by using catalyst compositions based on:

a) a palladium compound,

b) an acid with a pKa of less than 2, provided that the acid is not a hydrohalogenic acid, and

c) a bidentate ligand of the general formula $R^1R^2$-M-R-M-$R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group which contains at least two carbon atoms in the bridge.

An investigation carried out by the Applicant into these catalyst compositions has shown that their activity for the polymerization of carbon monoxide with one or more olefinically unsaturated organic compounds can be considerably enhanced by incorporating a quinone into the compositions. Catalyst compositions based on components a)-c) and in addition a quinone, are novel.

The present patent application therefore relates to novel catalyst compositions based on

a) a palladium compound,

b) an acid with a pKa of less than 2, provided that the acid is not a hydrohalogenic acid,

c) a bidentate ligand of the general formula $R^1R^2$-M-R-M-$R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group containing at least two carbon atoms in the bridge, and

d) a quinone.

The patent application further relates to the use of these catalyst compositions in the preparation of polymers of carbon monoxide with one or more olefinically unsaturated organic compounds.

Preferably the palladium compound used as component a) is a palladium salt of a carboxylic acid and in particular palladium acetate. Examples of suitable acids with a pKa of less than 2 (determined in aqueous solution at 18 °C) are sulphuric acid, perchloric acid, sulphonic acids, such as methanesulphonic acid, trifluoromethanesulphonic acid and para-toluenesulphonic acid and carboxylic acids, such as trichloroacetic acid, difluoroacetic acid and trifluoroacetic acid. Preference is given to para-toluenesulphonic acid and trifluoroacetic acid. Component b) is preferably applied in a quantity of from 0.5 to 200 and in particular 1.0 to 100, equivalents per gram atom of palladium.

In the bidentate ligand, M is preferably phosphorus. The groups $R^1$, $R^2$, $R^3$ and $R^4$ present in the bidentate ligand preferably contain 6 to 14 carbon atoms. Special preference is given to bidentate ligands in which the groups $R^1$, $R^2$, $R^3$ and $R^4$ are phenyl groups or alkyl-substituted phenyl groups. The bivalent organic bridging group R preferably contains three carbon atoms in the bridge. Examples of suitable bidentate ligands are: 1,3-bis(di-p-tolylphosphino)propane, 1,3-bis(di-p-methoxyphenylphosphino)propane, 1,3-bis-(diphenylphosphino)propane, and 2-methyl-2-(diphenyl-methyl-phosphino)-1,3-bis(diphenyl-phosphino)propane. Preferably either one of the latter two bidentate ligands is used. The bidentate ligand is preferably applied in a quantity of 0.1-5 and in particular of 0.5-1.5 mol per mol of palladium compound.

As the component d) either 1,2- or 1,4-quinones may be used. Preference is given to 1,4-quinones. Besides substituted or unsubstituted benzoquinones, other quinones, such as substituted or unsubstituted naphthaquinones and anthraquinones, are also eligible. Preference is given to benzoquinones and to 1,4-benzoquinones in particular. Examples of suitable compounds of this type are:

2,6-dichloro-1,4-benzoquinone,
tetrachloro-1,4-benzoquinone,
2,3-dimethyl-1,4-benzoquinone,
2,6-dimethyl-1,4-benzoquinone,
mono-methyl-1,4-benzoquinone,
trichloro-1,4-benzoquinone,
2,5-dihydroxy-1,4-benzoquinone,
2,5-dihydroxy-3,6-dinitro-1,4-benzoquinone, and
mono-nitro-1,4-benzoquinone.

The preferred component d) is 1,4-benzoquinone. The preferred quantity used is 1-10000 and in particular 10-5000 mol per gram atom of palladium.

The polymerization using the catalyst compositions according to the invention is preferably carried out in a liquid diluent. Very suitable liquid diluents are lower alcohols such as methanol and ethanol.

Eligible olefinically unsaturated organic compounds that can be polymerized with carbon monoxide with the aid of the catalyst compositions according to the invention are both compounds which consist exclusively of carbon and hydrogen and compounds which, in addition to carbon and hydrogen, contain one or more hetero-atoms. By preference the catalyst compositions according to the invention are used to prepare polymers of carbon monoxide with one or more olefinically unsaturated hydrocarbons. Examples of suitable hydrocarbon monomers are ethene and other α-olefins, such as propene, butene-1, hexene-1 and octene-1 as well as styrene and alkyl-substituted styrenes, such as p-methyl styrene and p-ethyl styrene. The catalyst compositions according to the invention are especially suitable for use in the preparation of copolymers of carbon monoxide with ethene and in the preparation of terpolymers of carbon monoxide with ethene and with an other olefinically unsaturated hydrocarbon, in particular propene.

The quantity of catalyst composition applied in the preparation of the polymers may vary within wide ranges. Per mol of olefinically unsaturated compound to be polymerized, a quantity of catalyst is used which preferably contains $10^{-7}$-$10^{-3}$ and in particular $10^{-6}$-$10^{-4}$ gram atom of palladium.

Preferably, the preparation of the polymers is carried out at a temperature of 20-200 °C and a pressure of 1-200 bar and in particular at a temperature of 30-150 °C and a pressure of 20-100 bar. In the mixture to be polymerized the molar ratio of the olefinically unsaturated organic compounds relative to carbon monoxide preferably is 10:1-1:5 and in particular 5:1-1:2. The carbon monoxide used in the preparation of the polymers according to the invention need not be pure. It may contain contaminations, such as hydrogen, carbon dioxide and nitrogen.

The invention will now be illustrated with the aid of the following examples.

Example 1

A carbon monoxide/ethene copolymer was prepared as follows. A magnetically stirred autoclave of 300 ml capacity was charged with 200 ml of methanol. After the contents of the autoclave were brought to 65 °C, a 1:1 carbon monoxide/ethene mixture was introduced until a pressure of 55 bar was reached. Then the autoclave was charged with a catalyst solution consisting of:
18 ml methanol,
0.03 mmol of palladium acetate,
0.036 mmol of 1,3-bis(diphenylphosphino)propane, and
0.06 mmol of p-toluenesulphonic acid.
The pressure was maintained at 55 bar by introducing under pressure a 1:1 carbon monoxide/ethene mixture. After 1.5 hour the polymerization was terminated by releasing the pressure. The polymer was filtered off, washed with methanol and dried at 70 °C. The yield was 15 g of copolymer, so the polymerization rate was 3100 g of copolymer/g of palladium/hour.

Example 2

A carbon monoxide/ethene copolymer was prepared in substantially the same manner as the copolymer in Example 1, except that now the catalyst solution also contained 0.3 mmol 1,4-benzoquinone. The yield was 22 g of copolymer, so the polymerization rate was 4600 g of copolymer/g of palladium/hour.

Example 3

A carbon monoxide/ethene copolymer was prepared in substantially the same manner as the copolymer in Example 1, the differences being that
a) a catalyst solution was used comprising:
6 ml of methanol,
0.01 mmol of palladium acetate,
0.012 mmol of 1,3-bis(diphenylphosphino)propane and
0.2 mmol of trifluoroacetic acid, and
b) the polymerization was terminated after 2 hours.
The yield was 6 g of copolymer, so the polymerization rate was 2800 g of copolymer/g of palladium/hour.

Example 4

A carbon monoxide/ethene copolymer was prepared in substantially the same manner as the copolymer in Example 3, the difference being that now the catalyst solution also contained 1 mmol of 1,4-benzoquinone.
The yield was 12 g of copolymer, so the polymerization rate was 5600 g of copolymer/g of palladium/hour.

Example 5

A carbon monoxide/ethene/propene terpolymer was prepared as follows. A mechanically stirred autoclave of 300 ml capacity was charged with 140 ml of methanol and 86 ml of liquid propene. After the contents of the autoclave had been brought to a temperature of 65 °C, a 1:1 carbon monoxide/ethene mixture was introduced until a pressure of 55 bar was reached. Then the autoclave was charged with a catalyst solution consisting of:
6 ml of methanol,
0.01 mmol of palladium acetate,
0.012 mmol of 1,3-bis(diphenylphosphino)propane,
0.2 mmol of trifluoroacetic acid.

Introduction of a 1:1 carbon monoxide/ethene mixture kept the pressure at 55 bar. After 4 hours the polymerization was terminated by releasing the pressure. The polymer was filtered off, washed with methanol and dried at 70 °C.

The yield was 8 g of terpolymer, so the polymerization rate was 1900 g of terpolymer/g of palladium/hour.

Example 6

A carbon monoxide/ethene/propene terpolymer was prepared in substantially the same manner as the terpolymer in Example 5, except that now the catalyst solution also contained 1 mmol of 1,4-benzoquinone.

The yield was 13 g of terpolymer, so the polymerization rate was 3100 g of terpolymer/g of palladium/hour.

Of the polymers prepared according to Examples 1-6, only the copolymers prepared according to Examples 2 and 4 and the terpolymer prepared according to Example 6 are polymers according to the invention. In the preparation of these polymers use was made of catalyst compositions according to the invention containing a quinone as the fourth component. The copolymers prepared according to Examples 1 and 3 and the terpolymer prepared according to Example 5 fall outside the scope of the invention and have been included in the patent application for comparison.

The favourable effect which the incorporation into the catalyst compositions according to the invention of a quinone as the fourth component has on the polymerization rate becomes evident upon comparison of the results of Examples 2, 4 and 6 with those of the Examples 1, 3 and 5, respectively.

All of the copolymers prepared according to Examples 1-4 had melting points of 257 °C. The terpolymer prepared according to Example 5 had a melting point of 170 °C, and the terpolymer prepared according to Example 6 had a melting point of 182 °C.

With the aid of $C^{13}$-NMR analysis it was established that the carbon monoxide/ethene copolymers prepared according to Examples 1-4 had a linear alternating structure and therefore consisted of units of the formula $-CO-(C_2H_4)-$.

It was also established by $C^{13}$-NMR analysis that the carbon monoxide/ethene/propene terpolymers had a linear structure and consisted of units of the formula $-CO-(C_2H_4)-$ and units of the formula $-CO-(C_3H_6)-$, which units occurred randomly distributed within the terpolymers. The data produced by $C^{13}$-NMR analysis showed that in the terpolymer prepared according to Example 5 there were 26 units based on propene to 74 units based on ethene, which amounts to a propene content in the terpolymer of 18.3 %w. Furthermore it was seen that in the terpolymer prepared according to Example 6 there were 215 units based on propene to 785 units based on ethene, which amounts to a propene content in the terpolymer of 15.3 %w.

Example 7 (for comparison)

A CO/ethene copolymer was prepared in the way described in Example 1, except the following differences
    a) catalyst solution of 0.019 mmol Pd-acetate, 0.02 mmol 1,3-bis[di(4-methoxyphenyl)-phosphino]propane, 0.38 mmol trifluoroacetic acid in 18 ml ethanol;
    b) polymerization temperature 100 °C;
    c) polymerization period 6.7 hours.
51.3 g of copolymer were produced, thus, the polymerization rate was 3800 g.g $Pd^{-1}$.$hr^{-1}$.

Example 8

A CO/ethene copolymer was produced in the manner indicated in Example 1 except the following differences
    a) catalyst solution of 0.01 mmol Pd-acetate, 0.012 mmol 1,3-[bis(di 4-methoxyphenyl)-phosphino]propane, 0.2 mmol trifluoroacetic acid and 2 mmol 1,4 benzoquinone in 18 ml ethanol;
    b) polymerization period 3 hours;
    c) polymerization temperature 96 °C.
29. 6 g copolymer were obtained, thus, the polymerization rate was 9300 g.g $Pd^{-1}$.$hr^{-1}$.

**Claims**

1.   Novel catalyst compositions, characterized in that they are based upon
     a) a palladium compound,
     b) an acid. with a pKa of less than 2, provided that the acid is not a hydrohalogenic acid,
     c) a bidentate ligand of the general formula $R^1R^2-M-R-M-R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group having at least two carbon atoms in the bridge, and
     d) a quinone.

2.   Catalyst compositions as claimed in claim 1, characterized in that they are based upon a palladium salt of a carboxylic acid, such as palladium acetate, as the component a).

3. Catalyst compositions as claimed in claim 1 or 2, characterized in that they are based upon a sulphonic acid, such as a p-toluenesulphonic acid, or a carboxylic acid, such as trifluoroacetic acid, as the component b).

4. Catalyst compositions as claimed in any one of claims 1-3, characterized in that a component c) is used wherein M is phosphorus.

5. Catalyst compositions as claimed in any one of claims 1-4, characterized in that a component c) is used wherein the groups are phenyl groups or alkyl-substituted phenyl groups, and wherein the bivalent organic bridging group R has three carbon atoms in the bridge.

6. Catalyst compositions as claimed in one or more of claims 1-5, characterized in that the component d) used is a 1,4-quinone, preferably a substituted or unsubstituted benzoquinone, such as 1,4-benzoquinone.

7. Process for the preparation of copolymers, characterized in that a mixture of carbon monoxide and one or more olefinically unsaturated organic compounds is copolymerized by using a catalyst composition as claimed in any one of claims 1 to 6.

8. Process as claimed in claim 7, characterized in that it is applied for the preparation of copolymers of carbon monoxide with ethene or of terpolymers of carbon monoxide with ethene and an other olefinically unsaturated hydrocarbon such as propene.

**Revendications**

1. Nouvelles compositions catalytiques, caractérisées en ce qu'elles comprennent :
a) un composé dérivé du palladium,
b) un acide ayant un $Pk_a$ inférieur à 2, à condition que l'acide ne soit pas un acide halohydrique,
c) un ligand bidentate de foule générale $R^1R^2\text{-}M\text{-}R\text{-}M\text{-}R^3R^4$, dans laquelle M représente un atome de phosphore, d'arsenic ou d'antimoine, $R^1$, $R^2$, $R^3$, $R^4$ représentent des groupes hydrocarbyle qui peuvent être substitués ou non avec des groupes polaires et R représente un groupe organique bivalent pontant comportant au moins deux atomes de carbone dans le pont, et
d) une quinone.

2. Compositions catalytiques selon la revendication 1, caractérisées en ce qu'elles comprennent un sel de palladium dérivé d'un acide carboxylique, notamment l'acétate de palladium, en tant que composant a).

3. Compositions catalytiques selon la revendication 1 ou 2, caractérisées en ce qu'elles comprennent un acide sulfonique, tel que l'acide p-toluènesulfonique, ou un acide carboxylique tel que l'acide trifluoroacétique, comme composant b).

4. Compositions catalytiques selon l'une quelconque des revendications 1 à 3, caractérisées en ce que l'on emploie un composant c) dans lequel M représente un atome de phosphore.

5. Compositions catalytiques selon l'une quelconque des revendications 1 à 4, caractérisées en ce que l'on emploie un composant c) dans lequel les groupes sont des groupes phényle ou des groupes phényle alkylés, et dans lequel le groupe organique bivalent pontant R comporte trois atomes de carbone dans le pont.

6. Compositions catalytiques selon au moins une des revendications 1 à 5, caractérisées en ce que le composant d) employé est une 1,4-quinone, de préférence une benzoquinone substituée ou non substituée, notamment la 1,4-benzoquinone.

7. Procédé de préparation de copolymères, caractérisé en ce qu'on copolymérise un mélange de monoxyde de carbone et d'un ou plusieurs composés organiques à insaturation oléfinique, en employant une composition catalytique selon l'une quelconque des revendications 1 à 6.

8. Procédé selon la revendication 7, caractérisé en ce qu'on le met en oeuvre pour préparer des copolymères de monoxyde de carbone avec l'éthène, ou des terpolymères de monoxyde de carbone, d'éthène et d'un autre hydrocarbure à insaturation oléfinique, notamment le propène.

**Patentansprüche**

1. Neue Katalysatorzusammensetzungen, dadurch gekennzeichnet, daß sie auf
a) einer Palladiumverbindung,
b) einer Säure mit einem pKa-Wert von kleiner als 2, mit der Maßgabe, daß die Säure nicht eine Halogenwasserstoffsäure ist,
c) einem Bidentatliganden der allgemeinen Formel $R^1R^2\text{-}M\text{-}R\text{-}M\text{-}R^3R^4$, worin

M

Phosphor, Arsen oder Antimon darstellt,

R$^1$, R$^2$, R$^3$ und R$^4$

Kohlenwasserstoffgruppen bedeuten, die mit polaren Gruppen substituiert oder unsubstituiert sein können, und

R eine zweiwertige organische Brückengruppe darstellt, die wenigstens zwei Kohlenstoffatome in der Brücke enthält, und

d) einem Chinon basieren.

2. Katalysatorzusammensetzungen nach Anspruch 1, dadurch gekennzeichnet, daß sie als Komponente a) auf einem Palladiumsalz einer Carbonsäure, wie Palladiumacetat, basieren.

3. Katalysatorzusammensetzung nach Anspruch 1 oder 2, dadurch gekennzeichnet, daß sie als Komponente b) auf einer Sulfonsäure, wie einer p-Toluolsulfonsäure, oder einer Carbonsäure, wie Trifluoressigsäure, basieren.

4. Katalysatorzusammensetzungen nach einem der Ansprüche 1 bis 3, dadurch gekennzeichnet, daß eine Komponente c) verwendet wird, worin M Phosphor bedeutet.

5. Katalysatorzusammensetzungen nach einem der Ansprüche 1 bis 4, dadurch gekennzeichnet, daß eine Komponente c) verwendet wird, worin die Gruppen R$^1$, R$^2$, R$^3$ und R$^4$ Phenylgruppen oder Alkyl-substituierte Phenylgruppen bedeuten und worin die zweiwertige organische Brückengruppe R 3 Kohlenstoffatome in der Brücke aufweist.

6. Katalysatorzusammensetzungen nach einem oder mehreren der Ansprüche 1 bis 5, dadurch gekennzeichnet, daß die eingesetzte Komponente d) ein 1,4-Chinon, vorzugsweise ein substituiertes oder unsubstituiertes Benzochinon, wie 1,4-Benzochinon, ist.

7. Verfahren zur Herstellung von Copolymeren, dadurch gekennzeichnet, daß ein Gemisch aus Kohlnemonoxid und einer oder mehreren olefinisch ungesättigten organischen Verbindungen unter Verwendung einer Katalysatorzusammensetzung nach einem der Ansprüche 1 bis 6 copolymerisiert wird.

8. Verfahren nach Anspruch 7, dadurch gekennzeichnet, daß es auf die Herstellung von Copolymeren von Kohlenmonoxid mit Ethen oder von Terpolymeren von Kohlenmonoxid mit Ethen und einem weiteren olefinisch ungesättigten Kohlenwasserstoff wie Propen angewendet wird.